# EUROPEAN PATENT APPLICATION

(11) **EP 3 661 029 A1**
(43) Date of publication of application: **03.06.2020**
(21) Application number: 19175635.2
(22) Date of filing: 21.05.2019
(51) Int. Cl.: H02K 11/24, H02K 33/02, H02K 33/12

(54) **FORCE DETECTION SYSTEM OF ELECTRIC CLEANSING APPLIANCE AND FORCE DETECTION METHOD**

(30) Priority: 28.11.2018 CN 201811436159
(71) Applicant: Kinpo Electronics, Inc., New Taipei City 22201 (TW)
(72) Inventor: LO, Wen-Hsin, 22201 New Taipei City (TW); LIU, Wen-Jui, 22201 New Taipei City (TW)
(74) Representative: 2K Patentanwälte Blasberg Kewitz & Reichel

(57) **Abstract**

A force detection system of an electric cleansing appliance includes a cleansing head (20) and an electric motor (10). The electric motor (10) includes a stator (11) and a rotor (12). The stator (11) has an iron core (111) having an accommodating space, a main coil (113), and an auxiliary coil (114). The rotor (12) is disposed in the accommodating space and has a rotor body (121), a magnetic element assembly (122), and a rotation axis (13) connected to the rotor body (121). The rotor (12) is connected to the cleansing head (20) through the rotation axis (13). The magnetic element assembly (122) having two magnetic elements, which are disposed on opposite sides of the rotor body (121), provides a magnetic force in a magnetic field direction. The main coil (113) is wound on the iron core (111) in a first direction which is perpendicular to the magnetic field direction. The auxiliary coil (114) is a winding structure and disposed adjacent to the main coil (113).

## Description

### BACKGROUND OF THE INVENTION

### Technical Field

The present disclosure relates to a force detection system and a force detection method, and more particularly to a force detection system of an electric cleansing appliance and a force detection method.

### Description of Related Art

The statements in this section merely provide background information related to the present disclosure and do not necessarily constitute prior art.

In recent years, with the improvement of the life quality, electric cleaning appliances for cleaning body parts, such as electric toothbrushes, electric face wash machines, or other electric appliances for cleaning other body parts have gradually become popular, and even have become indispensable necessities in daily life.

Take the electric toothbrush for example, in addition to effectively achieve the effect of cleaning the user's teeth, the effect of protecting the user's teeth and gums due to the excessive force contacting on the user's teeth is equally important.

For the protection of the user's teeth and gums, the detection of an external force applied on a cleansing head of the electric toothbrush is the most critical. If the excessive external force applied on the user's teeth is detected, the swing speed or rotation speed of the cleansing head is controlled to reduce so as to protect the user's teeth and gums.

In the prior art, there are two common solutions for the force detection of the cleansing head. The first one is, a Hall-effect sensor is used for the force detector, and the swing speed or rotation speed of the cleansing head is adjusted according to the detected force results so as to protect the user's teeth and gums. However, the additional Hall-effect sensor is used to increase costs, occupied space, and design complexity of the control circuit. The second one is, a precise mechanism design is used for the force detection and excessive-force protection. However, the complicated mechanism design makes high cost, increased occupied space, high failure rate, and difficult maintain.

### SUMMARY OF THE INVENTION

An objective of the present disclosure is to provide a force detection system of an electric cleansing appliance to solve problems of using the Hall-effect sensor or the precise mechanism for the force detection.

In order to achieve the aforementioned objective, the force detection system of the electric cleansing appliance includes a cleansing head and an electric motor. The electric motor includes a stator and a rotor. The stator has an iron core having an accommodating space, a main coil, and an auxiliary coil. The rotor is disposed in the accommodating space, and the rotor includes a rotor body, a magnetic element assembly, and a rotation axis connected to the rotor body. The rotor is connected to the cleansing head through the rotation axis. The magnetic element assembly has two magnetic elements disposed on opposite sides of the rotor body and a magnetic force in a magnetic field direction is provided by the two magnetic elements. The main coil is wound on the iron core in a first direction perpendicular to the magnetic field direction. The auxiliary coil is a winding structure and disposed adjacent to the main coil.

Accordingly, the simple coil arrangement between the auxiliary coil and the main coil is provided in the force detection system of the electric cleansing appliance to simplify and miniaturize the electric cleansing appliance as well as protect the user's teeth and gums.

Another objective of the present disclosure is to provide a force detection system of an electric cleansing appliance to solve problems of using the Hall-effect sensor or the precise mechanism for the force detection.

In order to achieve the aforementioned objective, the force detection method for an electric cleansing appliance, the electric cleansing appliance includes a cleansing head and an electric motor having a stator and a rotor. The rotor includes a magnetic element assembly providing a magnetic force in a magnetic field direction and a rotation axis connected to the cleansing head. The stator includes a main coil and an auxiliary coil, the main coil is wound on an iron coil in a first direction perpendicular to the magnetic field direction, and the auxiliary coil is a winding structure and disposed adjacent to the main coil. The force detection method comprises the steps of: (a) receiving, by the cleansing head, an external force under an operation condition, (b) transmitting, through the rotation axis, the external force to the rotor and generating torque from the rotor so that a magnetic field of the stator in the direction of the magnetic field is varied, and (c) generating an electrical signal by inducing the auxiliary coil by the varied magnetic field to detect a magnitude of the external force according to the electrical signal.

Accordingly, the simple coil arrangement between the auxiliary coil and the main coil is provided in the force detection method for the electric cleansing appliance to simplify and miniaturize the electric cleansing appliance as well as protect the user's teeth and gums.

It is to be understood that both the foregoing general description and the following detailed description are exemplary, and are intended to provide further explanation of the present disclosure as claimed. Other advantages and features of the present disclosure will be apparent from the following description, drawings and claims.

### BRIEF DESCRIPTION OF DRAWING

The present disclosure can be more fully understood by reading the following detailed description of the embodiment, with reference made to the accompanying drawings as follows:
FIG. 1 is a front view of a force detection system of an electric cleansing appliance according to the present disclosure,
FIG. 2 is a top view of the force detection system of the electric cleansing appliance according to the present disclosure,
FIG. 3 is a schematic view of an arrangement of an auxiliary coil and a main coil of the force detection system of the electric cleansing appliance according to a first embodiment of the present disclosure,
FIG. 4 is a schematic view of the arrangement of the auxiliary coil and the main coil of the force detection system of the electric cleansing appliance according to a second embodiment of the present disclosure,
FIG. 5 is a block diagram of a circuit unit of the force detection system of the electric cleansing appliance according to the present disclosure, and
FIG. 6 is a flowchart of a force detection method for the electric cleansing appliance according to the present disclosure.

### DETAILED DESCRIPTION OF THE INVENTION

Reference will now be made to the drawing figures to describe the present disclosure in detail. It will be understood that the drawing figures and exemplified embodiments of present disclosure are not limited to the details thereof.

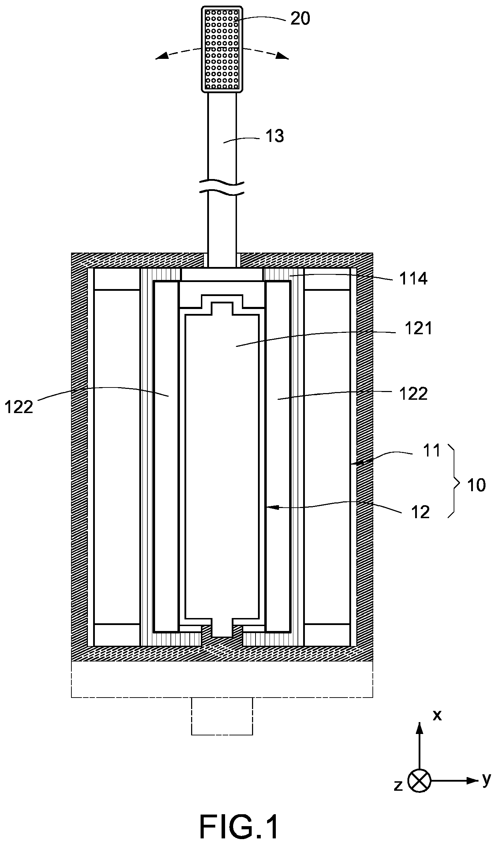

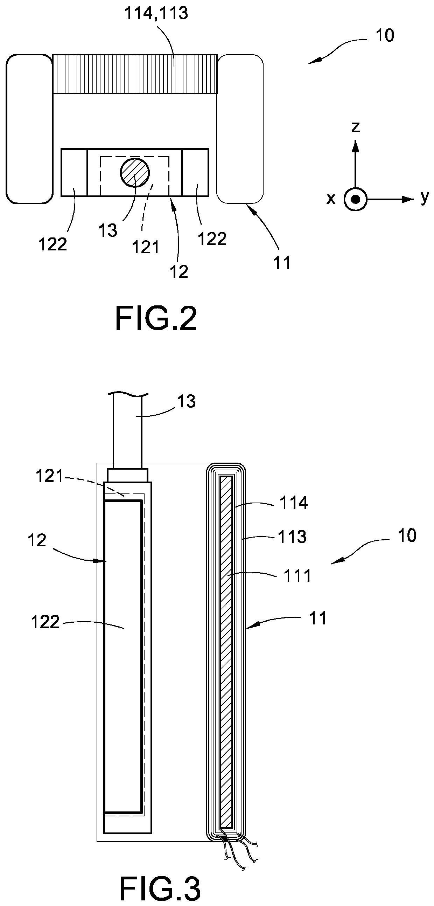

Please refer to FIG. 1 and FIG. 2, which are a front view and a top view of a force detection system of an electric cleansing appliance according to the present disclosure, respectively. The electric cleansing appliance may be an electric toothbrush, an electric face wash machine, or other electric appliances for cleaning other body parts. Hereinafter, the electric toothbrush is exemplified for further demonstration. And the same or similar operation principles and technical means of the electric toothbrush are also applicable to the electric face wash machine or other electric appliances for cleaning other parts of the body.

The force detection system of the electric cleansing appliance includes an electric motor 10 and a cleansing head 20. The electric motor 10 has a stator 11 and a rotor 12. The electric motor 10 and cleansing head 20 are illustrated for convenience of description and not by actual scale, and the scope of the present disclosure is not limited by the illustration. In one embodiment, the electric motor 10 is, for example but not limited to, a stepper motor or a servo motor.

The stator 11 is a stationary part of the electric motor 10, and the stator 11 has an iron core 111 having an accommodating space, a main coil 113, and an auxiliary coil 114. The rotor 12, which is disposed in the accommodating space, is a nonstationary (for example, rotatable or swingable) part of the electric motor 10, and the rotor 12 has a rotor body 121, a magnetic element assembly 122, and a rotation axis 13 connected to the rotor body 121. The rotor 12 is connected to the cleansing head 20 through the rotation axis 13. Therefore, the cleansing head 20 also correspondingly rotates or swings when the rotor 12 rotates or swings in the accommodating space.

The magnetic element assembly 122 has two magnetic elements of opposite polarity, for example, one of the magnetic elements is an N-pole permanent magnet and the other is an S-pole permanent magnet. Therefore, a magnetic force is generated between the two magnetic elements, and a magnetic field direction is from the N-pole permanent magnet to the S-pole permanent magnet, i.e., an X-axis direction of the coordinates (hereinafter referred to as the X-axis direction). In this embodiment, the two magnetic elements are disposed on opposite sides of the rotor body 121.

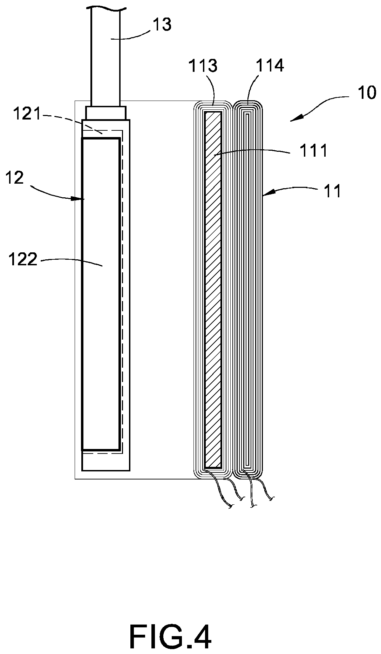

The main coil 113 is wound on the iron core 111 in a first direction, and the first direction is perpendicular to the magnetic field direction, that is, the first direction is a Y-axis direction of the coordinates (hereinafter referred to as the Y-axis direction). The auxiliary coil 114 is a winding structure and is disposed adjacent to the main coil 113. In one embodiment, the main coil 113 and the auxiliary coil 114 may be enamelled wire coil. In the present disclosure, the arrangement of disposing the auxiliary coil 114 adjacent to the main coil 113 has two embodiments, and the detailed descriptions will be made hereinafter with reference to FIG. 3 and FIG. 4, respectively.

Please refer to FIG. 3, which is a schematic view of an arrangement of an auxiliary coil and a main coil of the force detection system of the electric cleansing appliance according to a first embodiment of the present disclosure. In the first embodiment, the auxiliary coil 114 is directly wound on the main coil 113 in the first direction (i.e., the Y-axis direction). In particular, the induction effect of the auxiliary coil 114 can be increased by increasing the coil turn number of the auxiliary coil 114. Preferably, a coil turn ratio between the auxiliary coil and the main coil is greater than or equal to 0.3. In other words, when the coil turn number of the main coil 113 is fixed, the generated induced current can be increased by increasing the coil turn number of the auxiliary coil 114. It is worth noting that the present disclosure is not limited to the exemplified coil turn ratio, as long as the coil turn number of the auxiliary coil 114 is sufficient to accurately be induced by the changed magnetic field to generate the induced current, details are as follows.

As mentioned above, the main coil 113 and the auxiliary coil 114 may be enamelled wire coil coated with film insulation to provide an insulation between the auxiliary coil 114 and the main coil 113 when the auxiliary coil 114 is directly wound on the main coil 113. Moreover, an insulation element, such as an insulating strip, an insulating tape, an insulating rubber, or so on is further disposed between the auxiliary coil 114 and the main coil 113 to obtain better insulation effect.

Please refer to FIG. 4, which is a schematic view of the arrangement of the auxiliary coil and the main coil of the force detection system of the electric cleansing appliance according to a second embodiment of the present disclosure. In the second embodiment, the auxiliary coil 114 is by itself wound in the first direction, and then disposed on one side of the main coil 113, that is, the auxiliary coil 114 is not directly wound on the main coil 113. For example, after being itself wound, the auxiliary coil 114 is directly disposed adjacent to one side of the main coil 113, or is indirectly disposed adjacent to one side of the main coil 113 by the insulation element. Similarly, the generated induced current can be accurately induced by increasing the coil turn number of the auxiliary coil 114 to increase the induction effect of the auxiliary coil 114.

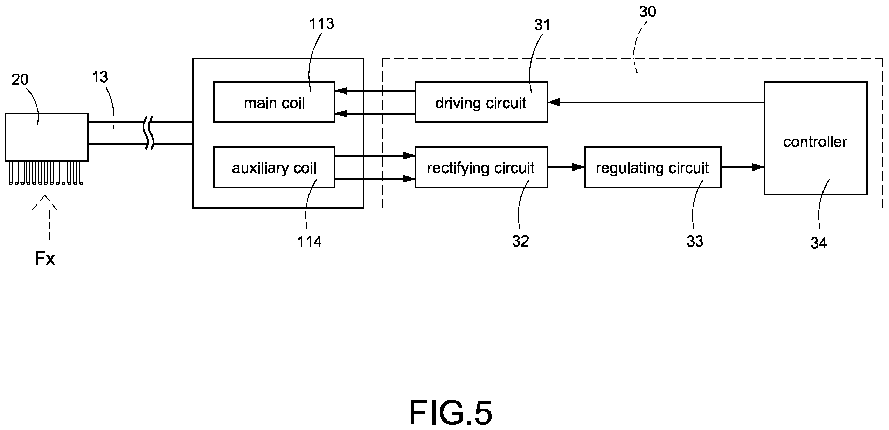

Please refer to FIG. 5, which is a block diagram of a circuit unit of the force detection system of the electric cleansing appliance according to the present disclosure, and also refer to FIG. 3 and FIG. 4. The circuit unit 30 includes a driving circuit 31, a rectifying circuit 32, a regulating circuit 33, and a controller 34. The driving circuit 31 is coupled to the main coil 113, and the rectifying circuit 32 is coupled to the auxiliary coil 114. The regulating circuit 33 is coupled to the rectifying circuit 32, and the controller 34 is coupled to the driving circuit 31 and the regulating circuit 33. More specifically, the driving circuit 31 receives a supplying power source (not shown), such as a DC power source of a battery, and the driving circuit 31 converts the supplying power source into a driving power source, such as an AC power source alternated between the positive half period and the negative one for suppling power to the main coil 113. In one embodiment, the driving circuit 31 is, for example but not limited to, an H-bridge circuit. The H-bridge circuit receives the DC supplying power source and converts the DC supplying power source into the AC driving power source by controlling upper-arm switches and lower-arm switches.

The main coil 113, wound on the iron core 111, is made by a first conductive wire with two wire ends, including a first end and a second end. The two wire ends are electrically coupled to the AC driving power source outputted from the driving circuit 31 so that the main coil 113 is supplied power by the AC driving power source. The auxiliary coil 114, disposed adjacent to the main coil 113, is made by a second conductive wire with two wire ends, including a third end and a fourth end. The two wire ends are electrically coupled to the rectifying circuit 32. And the induced current outputted from the two wire ends is rectified by the rectifying circuit 32 into a single-polarity DC current. In actual circuit operation, the induced current is converted into an induced voltage by a resistor element, and then the induced voltage is rectified by the rectifying circuit 32 a single-polarity DC voltage.

More specifically, the two magnetic elements of the magnetic element assembly 122 provide the magnetic force in the magnetic field direction. Also, the AC driving power source supplies power to the main coil 113 so that the rotor 12 is forced to rotate through the magnetic field. Further, the two magnetic elements with different polarities, such as N-pole and S-pole permanent magnets disposed on opposite sides of the rotor body 121 provide attractive or repulsive forces to make the rotor 12 swing left and right at high speed. Since the rotor 12 is connected to the cleansing head 20 through the rotation axis 13, the cleansing head 20 also correspondingly swings left and right at high speed, thereby achieving the oral cleaning effect.

When the user manipulates the electric cleansing appliance, such as the electric toothbrush, the cleansing head 20 receives the external force Fx generated by contacting the cleansing head 20 on the user's teeth. The external force Fx is transmitted to the rotor 12 through the rotation axis 13 to make the rotor 12 generate torque so that a magnetic field of the stator 11 in the direction of the magnetic field is varied. Specifically, when the external force Fx is applied on the cleansing head 20, the external force Fx is transmitted to the rotor 12 through the rotation axis 13 and the generated torque cause a change in current so that the magnetic field of the stator 11 in the direction of the magnetic field is varied.

In this embodiment, the auxiliary coil 114 is just disposed adjacent to the main coil 113 and is not powered by any external power source, and therefore the auxiliary coil 114 is induced by the changed magnetic field to generate the electrical signal, such as an induced current. As mentioned above, since two wire ends of the auxiliary coil 114 are electrically coupled to the rectifying circuit 32, the induced current outputted from the auxiliary coil 114 is converted into an induced voltage, and then the induced voltage is rectified by the rectifying circuit 32 into a DC voltage. Moreover, the regulating circuit 33 regulates the DC voltage to provide an output DC voltage with a stable voltage value. The controller 34 receives the output DC voltage with the stable voltage value to acquire a magnitude of the external force Fx that is positive correlated with the induced current according to the voltage value of the output DC voltage.

For example, the suitable force for brushing teeth is about 90 to 150 grams. And it is assumed that the 150-gram external force Fx is corresponding to the induced current of 1 milliamp generated from the auxiliary coil 114. If the external force Fx is reduced, the induced current is less than 1 milliamp, by contrast, the induced current is greater than 1 milliamp. Therefore, the induced current is converted into the induced voltage and the controller 34 realizes the magnitude of the external force Fx according to the voltage value of the processed induced voltage by rectification and voltage regulation. For example, when the voltage value of the processed induced voltage received by the controller 34 is 1 volt that is corresponding to 1-milliamp induced current, the controller 34 determines that the external force Fx is equal to 150 grams. In other words, if the processed induced voltage received by the controller 34 is less than 1 volt, it means that the external force Fx is less than 150 grams, by contrast, it means that the external force Fx is greater than 150 grams.

Therefore, the controller 34 determines the magnitude of the external force Fx applied on the cleansing head 20 according to the processed induced voltage. Further, the controller 34 may generate a PWM (pulse width modulation) signal to control the driving circuit 31 to change (adjust) the magnitude of the AC driving power source so as to control the swing speed of the cleansing head 20 driven by the rotor 12 of the electric motor 10. If the cleansing head 20 is excessively contacted on the user's teeth, i.e., the external force Fx is too large (for example, it is larger than 150 grams), the processed induced voltage received by the controller 34 is greater than 1 volt, and therefore the controller 34 controls the driving circuit 31 to reduce the magnitude of the AC driving power source of supplying the main coil 113 to reduce the swing speed of the cleansing head 20 driven by the rotor 12, thereby protecting the user's teeth and gums.

In summary, the arrangement between the main coil 113 and the auxiliary coil 114 disposed adjacent to the main coil 113 is designed and the main coil 113 is supplied power to make the rotor 12 repeatedly swing left and right at high speed. Further, the induced current outputted from the auxiliary coil 114 is converted and processed into the induced voltage and is transmitted to the controller 34, and therefore the controller 34 determines the magnitude of the external force Fx according to the processed induced voltage. Accordingly, if the external force Fx is too large, the controller 34 controls the driving circuit 31 to reduce the swing speed of the cleansing head 20, thereby protecting the user's teeth and gums.

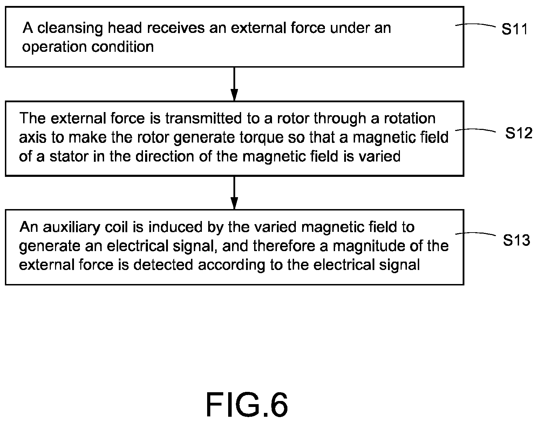

Please refer to FIG. 6, which is a flowchart of a force detection method for the electric cleansing appliance according to the present disclosure. The electric cleansing appliance includes a cleansing head 20 and an electric motor 10 having a stator 11 and a rotor 12. The structure of the stator 11 and the rotor 12 has been explicitly described above, and therefore the detail description thereof is omitted here for conciseness. The force detection method for the electric cleansing appliance includes the steps as follows. First, the cleansing head 20 receives an external force Fx under an operation condition (S11). When the user uses the electric cleansing appliance, such as an electric toothbrush, the cleansing head 20 receives the external force Fx generated by contacting the cleansing head 20 on the user's teeth, that is, the external force Fx is applied on the cleansing head 20.

Afterward, the external force Fx is transmitted to the rotor 12 through the rotation axis 13 to make the rotor 12 generate torque so that a magnetic field of the stator 11 in the direction of the magnetic field is varied (S12). When the external force Fx is applied on the cleansing head 20, the external force Fx is transmitted to the rotor 12 through the rotation axis 13 and the generated torque cause a change in current so that the magnetic field of the stator 11 in the direction of the magnetic field is varied.

Afterward, the auxiliary coil 114 is induced by the varied magnetic field to generate an electrical signal, and therefore a magnitude of the external force Fx can be detected according to the electrical signal (S13). The auxiliary coil 114 is disposed adjacent to the main coil 113 and is not powered by any external power source, and therefore the auxiliary coil 114 is induced by the changed magnetic field to generate the electrical signal, such as an induced current. Two wire ends of the auxiliary coil 114 are electrically coupled to the rectifying circuit 32, and therefore the induced current outputted from the auxiliary coil 114 is converted into an induced voltage, and the induced voltage is rectified into a direct-current (DC) voltage by the rectifying circuit 32. Moreover, the regulating circuit 33 regulates the DC voltage to provide an output DC voltage with a stable voltage value. The controller 34 receives the output DC voltage with the stable voltage value to acquire the magnitude of the external force Fx that is positive correlated with the induced current according to the voltage value of the output DC voltage.

Accordingly, the controller 34 determines the magnitude of the external force Fx applied on the cleansing head 20 according to the processed induced voltage. Further, the controller 34 may control the driving circuit 31 to change (adjust) the magnitude of the AC driving power source of supplying the main coil 113 so as to control the swing speed of the cleansing head 20 driven by the rotor 12 of the electric motor 10. If the cleansing head 20 is excessively contacted on the user's teeth, i.e., the external force Fx is too large, the processed induced voltage received by the controller 34 is greater than a pre-determined reference voltage, and therefore the controller 34 controls the driving circuit 31 to reduce the magnitude of the AC driving power source of supplying the main coil 113 to reduce the swing speed of the cleansing head 20 driven by the rotor 12, thereby protecting the user's teeth and gums.

In conclusion, the present disclosure has following features and advantages:
1. The simple coil arrangement between the auxiliary coil 114 and the main coil 113 is provided to generate the electrical signal and detect the magnitude of the external force Fx, thereby simplifying and miniaturizing the electric cleansing appliance, and
2. When the external force Fx is too large, the controller 34 controls the driving circuit 31 to reduce the swing speed of the cleansing head 20 driven by the rotor 12, thereby protecting the user's teeth and gums.

## Claims

1. A force detection system of an electric cleansing appliance, **characterized in that** the force detection system of the electric cleansing appliance comprising:
a cleansing head (20), and
an electric motor (10), comprising a stator (11) and a rotor (12), wherein
the stator (11) comprises an iron core (111) having an accommodating space, a main coil (113), and an auxiliary coil (114);
the rotor (12) is disposed in the accommodating space, and the rotor (12) comprises a rotor body (121), a magnetic element assembly (122), and a rotation axis (13) connected to the rotor body (121); the rotor (12) is connected to the cleansing head (20) through the rotation axis (13); the magnetic element assembly (122) has two magnetic elements disposed on opposite sides of the rotor body (121) and a magnetic force in a magnetic field direction is provided by the two magnetic elements;
wherein the main coil (113) is wound on the iron core (111) in a first direction perpendicular to the magnetic field direction; the auxiliary coil (114) is a winding structure and disposed adjacent to the main coil (113).

2. The force detection system of the electric cleansing appliance in claim 1, wherein the cleansing head (20) receives an external force (Fx) under an operation condition, and the external force (Fx) is transmitted to the rotor (12) through the rotation axis (13) to make the rotor (12) generate torque so that a magnetic field of the stator (11) in the direction of the magnetic field is varied; the auxiliary coil (114) is induced by the varied magnetic field to generate an electrical signal and a magnitude of the external force (Fx) is detected according to the electrical signal.

3. The force detection system of the electric cleansing appliance in claim 1, wherein the auxiliary coil (114) is directly wound on the main coil (113) in the first direction.

4. The force detection system of the electric cleansing appliance in claim 1, wherein the auxiliary coil (114) is by itself wound in the first direction and then disposed on one side of the main coil (113).

5. The force detection system of the electric cleansing appliance in claim 3 or claim 4, wherein an insulation element is disposed between the auxiliary coil (114) and the main coil (113).

6. The force detection system of the electric cleansing appliance in claim 1, wherein a coil turn ratio between the auxiliary coil (114) and the main coil (113) is greater than or equal to 0.3.

7. The force detection system of the electric cleansing appliance in claim 1, wherein the main coil (113) is made by a first conductive wire having a first end and a second end, and the auxiliary coil (114) is made by a second conductive wire having a third end and a fourth end; wherein a voltage difference is generated between the third end and the fourth end when the cleansing head (20) receives an external force (Fx) under an operation condition.

8. The force detection system of the electric cleansing appliance in claim 2, further comprising:
a circuit unit (30) coupled to the auxiliary coil (114), wherein the circuit unit (30) receives the electrical signal and detects the magnitude of the external force (Fx) according to the electrical signal.

9. A force detection method for an electric cleansing appliance, the electric cleansing appliance comprising a cleansing head (20) and an electric motor (10) having a stator (11) and a rotor (12), wherein the rotor (12) comprises a magnetic element assembly (122) providing a magnetic force in a magnetic field direction and a rotation axis (13) connected to the cleansing head (20); the stator (11) comprises a main coil (113) and an auxiliary coil (114), the main coil (113) is wound on an iron coil in a first direction perpendicular to the magnetic field direction, and the auxiliary coil (114) is a winding structure and disposed adjacent to the main coil (113), **characterized in that** the force detection method comprising the steps of:
(a) receiving, by the cleansing head (20), an external force (Fx) under an operation condition,
(b) transmitting, through the rotation axis (13), the external force (Fx) to the rotor (12) and generating torque from the rotor (12) so that a magnetic field of the stator (11) in the direction of the magnetic field is varied, and
(c) generating an electrical signal by inducing the auxiliary coil (114) by the varied magnetic field to detect a magnitude of the external force (Fx) according to the electrical signal.

10. The force detection method for the electric cleansing appliance in claim 9, wherein the auxiliary coil (114) is directly wound on the main coil (113) in the first direction.

11. The force detection method for the electric cleansing appliance in claim 9, wherein the auxiliary coil (114) is by itself wound in the first direction and then disposed on one side of the main coil (113).

12. The force detection method for the electric cleansing appliance in claim 10 or claim 11, wherein an insulation element is disposed between the auxiliary coil (114) and the main coil (113).

13. The force detection method for the electric cleansing appliance in claim 9, wherein a coil turn ratio between the auxiliary coil (114) and the main coil (113) is greater than or equal to 0.3.

14. The force detection method for the electric cleansing appliance in claim 9, wherein the main coil (113) is made by a first conductive wire having a first end and a second end, and the auxiliary coil (114) is made by a second conductive wire having a third end and a fourth end; wherein a voltage difference is generated between the third end and the fourth end when the cleansing head (20) receives an external force (Fx) under an operation condition.

15. The force detection method for the electric cleansing appliance in claim 9, wherein the electric cleansing appliance further comprises a circuit unit (30), and after step (c) further comprising the step of:
(d) receiving, by the circuit unit (30), the electrical signal generated by the auxiliary coil (114) to detect the magnitude of the external force (Fx) according to the electrical signal.
